# EUROPÄISCHE PATENTANMELDUNG

(11) **EP 2 051 015 A2**
(43) Veröffentlichungstag der Anmeldung: **22.04.2009**
(21) Anmeldenummer: 08450156.8
(22) Anmeldetag: 10.10.2008
(51) Int. Cl.: F24D 3/14

(54) **Bodenkanalheizung**

(30) Priorität: 18.10.2007 AT 16802007
(71) Anmelder: Variotherm Heizsysteme GmbH., 2544 Leobersdorf (AT)
(72) Erfinder: Watzek, Alexander, 2544 Leobersdorf (AT); Holzbauer, Herbert, 2542 Kottingbrunn (AT)
(74) Vertreter: Rippel, Andreas

(57) **Zusammenfassung**

Bei einer Bodenkanalheizung mit einem im Boden versenkten trogförmigen Kanal (1, 2) ist mindestens ein Konvektor (3) angeordnet, der in der Bodenebene durch ein Gitter (12) abgedeckt ist.

Der trogformige Kanal besteht in Modulbauweise aus Trogstücken (1, 2), deren Längswände (4, 5) miteinander verbunden sind.

Dadurch wird die Fertigung vereinfacht.

## Beschreibung

Die Erfindung bezieht sich auf eine Bodenkanalheizung mit einem im Boden versenkten trogförmigen Kanal, in dem mindestens ein Konvektor angeordnet ist und der in der Bodenebene durch Gitter abgedeckt ist.

Bodenkanalheizungen dieser Art werden insbesondere vor großen, bis nahe dem Boden reichenden Glasflächen eingesetzt, bei denen vorgebaute Heizkörper stören würden.
Die trogförmigen Kanäle der bekannten Bodenkanalheizungen werden im wesentlichen in einer Länge gefertigt, die den jeweiligen Raumverhältnissen angepasst ist. Es ist daher für jede Baustelle eine eigene Fertigung der trogförmigen Kanäle erforderlich. Dies wirkt sich in einer Verteuerung und einer Zeitverzögerung ab Auftragserteilung aus.

Die Erfindung hat es sich zum Ziel gesetzt, eine Bodenkanalheizung der eingangs beschriebenen Art zu schaffen, bei der die geschilderten Nachteile nicht auftreten können. Erreicht wird dies dadurch, dass der trogförmige Kanal in Modulbauweise aus Trogstücken besteht, deren Längswände miteinander verbunden sind.

Bei einer erfindungsgemäßen Bodenkanalheizung können die Trogstücke vorgefertigt und auf Lager gelegt werden, um im Bedarfsfall zu einem gesamten trogförmigen Kanal zusammengebaut zu werden.

Zur Verbindung der einzelnen Trogstücke ist erfindungsgemäß insbesondere vorgesehen, dass die Enden der Längswände der Trogstücke lotrecht verlaufende Vertiefungen besitzen, in die Vorsprünge von Verbindungsstücken eingeschoben sind.

Zweckmäßig weisen die Längswände annähernd U-förmigen Querschnitt auf und die ebenfalls U-förmigen Verbindungsstücke sind in das "U" der Längswände eingeschoben.

Eine weitere Schwierigkeit bei der Montage und auch dem Betrieb der bekannten Bodenkanalheizkörper besteht darin, dass das abdeckende Gitter genau in der Bodenebene liegen soll, damit keine störende Stufe entsteht. Dies ist beim Bau bzw. bei der Montage der Bodenkanalheizung nicht einfach zu erreichen und es ist überdies auch möglich, dass nach der Fertigstellung der Bodenkanalheizung Höhenverschiebungen stattfinden.

Diesen Nachteilen wird im Rahmen der Erfindung dadurch begegnet, dass das Gitter mit seinen Tragteilen unabhängig vom trogförmigen Kanal gegenüber dem Boden höhenverstellbar ist.

Mit einer erfindungsgemäßen Bodenkanalheizung kann auf diese Weise sowohl während des Baues als auch noch nachher das Gitter dem Niveau des Bodens auf einfache Weise angepaßt werden.

Die Höhenverstellung des Gitters kann auf verschiedene Art erfolgen. Bei einer bevorzugten Ausführungsform der Erfindung sind in das "U" der Längswände Stützen für das Gitter abstützende Träger einschiebbar.

Die Stützen besitzen vorteilhaft eine mit einem Schraubloch versehene Bodenplatte, in welche Verstellschrauben einschraubbar sind. Durch Verschrauben der Verstellschrauben in der einen oder anderen Richtung kann das Gitter mit seinen Tragteilen unabhängig vom trogförmigen Kanal gegenüber dem umgebenden Boden abgesenkt oder erhöht werden.

Der trogförmige Kanal kann dabei in Weiterbildung der Erfindung vorteilhaft aus Kunststoff bestehen.

Nachstehend ist die Erfindung anhand eines in den Zeichnungen dargestellten Ausführungsbeispieles näher beschrieben, ohne auf dieses Beispiel beschränkt zu sein.

Dabei zeigen:

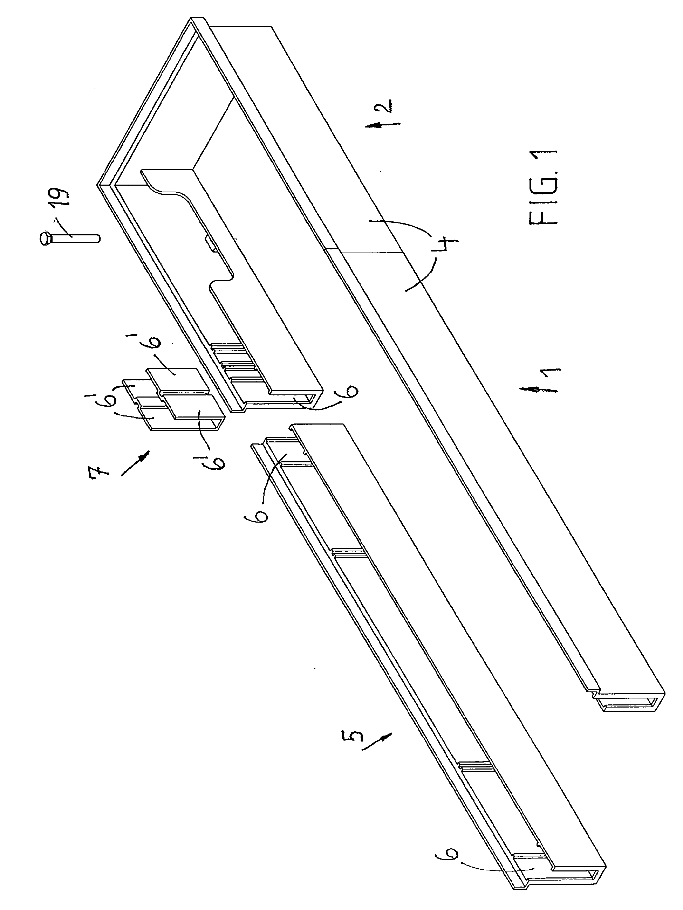

- Fig. 1: in schaubildlicher Ansicht schräg von oben zwei Trogstücke, wobei eine Seitenwand vor dem Verbinden und das Verbindungsstück vor dem Einschieben dargestellt ist;

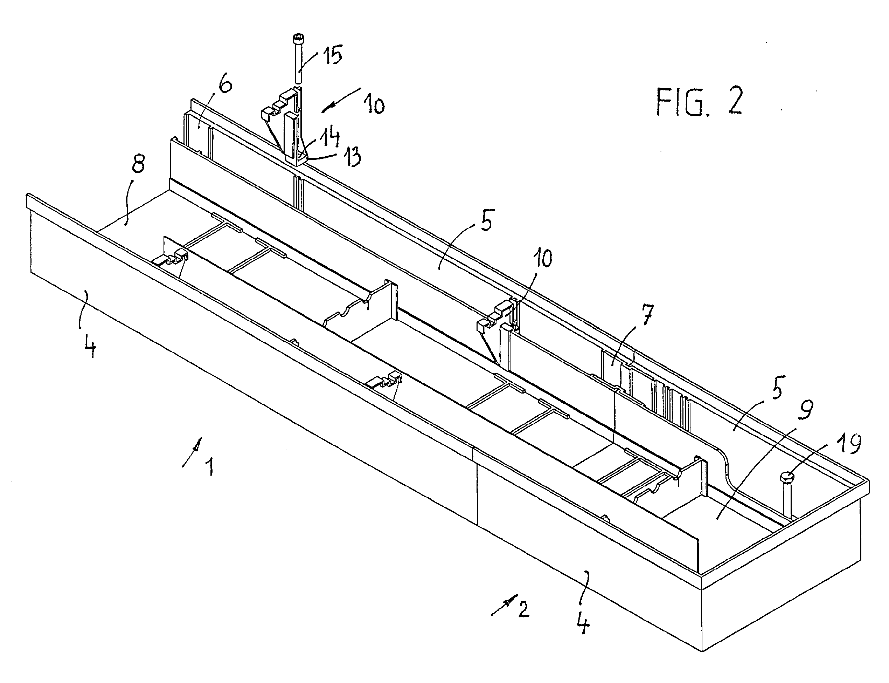

- Fig. 2: eine Draufsicht auf die verbundenen Trogstücke nach Fig. 1 mit Böden und Stützen;
- Fig. 3: eine schaubildliche Ansicht der beiden Trogstücke schräg von oben mit eingesetztem Konvektor und teilweise aufgelegtem Gitter;
- Fig. 4: eine schaubildliche Ansicht einer Stütze.

Gemäß den Zeichnungen bilden zwei Trogstücke, nämlich ein durchgehendes Trogstück 1 und ein endseitiges Trogstück 2 einen trogförmigen Kanal zur Aufnahme mindestens eines Konvektors 3. Die Trogstücke 1 und 2 besitzen Längswände 4 und 5 mit annähernd U-förmigen Querschnitt, die an ihren Enden lotrecht verlaufende Vertiefungen 6 aufweisen. Zur Verbindung zweier Trogstücke 1 und 2 sind ebenfalls U-förmige Verbindungsstücke 7 mit ihren Vorsprüngen 6' in die Vertiefungen 6 eingeschoben.

Zwischen den Längswänden 4 und 5 erstreckt sich zur Vervollständigung des trogförmigen Kanals jeweils ein Bodenteil 8 bzw. 9.

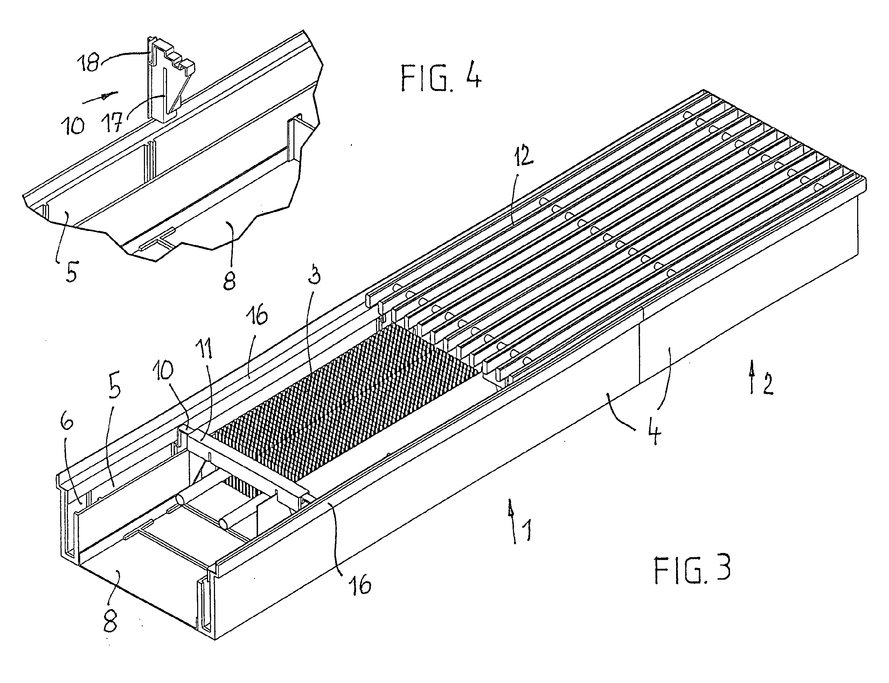

In das "U" der Seitenwände 4, 5 sind Stützen 10 für Träger 11 eingeschoben, die ein Gitter 12 abstützen, welches den trogförmigen Kanal nach oben abdeckt (Fig. 4).

Das Gitter 12 liegt auf einem etwa Z-förmigen Profil 16 auf, das auf die Oberseite der Längswände 5 aufgesetzt ist. Die Stützen 10 besitzen einen Schlitz 17, mit dem sie auf den inneren Steg der Längswände 5 aufgeschoben sind, und einen Schlitz 18, in den das Profil 16 eingeschoben ist.

Jede Stütze 10 besitzt eine kleine Bodenplatte 13, die mit einem Schraubloch 14 versehen ist. In dieses Schraubloch 14 kann eine Schraube 15 eingeschraubt werden, die sich am Boden des trogförmigen Kanals 1, 2 abstützt. Durch Verdrehen der Schraube 15 kann daher das Gitter 12 mit seinen Tragteilen 10,16 unabhängig vom trogförmigen Kanal gehoben oder abgesenkt werden.

An den Trogstücken 1, 2 sind beidseits Schrauben 19 in den Verbindungsteil der lotrechten Schenkel des "U" der Seitenwände 4, 5 eingeschraubt, mittels denen der trogförmige Kanal während der Baustelleneinrichtung gehoben oder abgesenkt werden kann.

Die Erfindung ermöglicht somit einerseits die Bildung des trogförmigen Kanals aus miteinander verbundenen Trogstücken 1,2, andererseits eine Höhenverstellung des abdeckenden Gitters 12 mit seinen Tragteilen 10,16 unabhängig vom trogförmigen Kanal, somit auch nach Fertigstellung des Baues,

Die einzelnen Trogstücke 1 und 2 lassen sich besonders vorteilhaft aus Kunststoff herstellen, wobei grundsätzlich aber auch eine Herstellung aus Blech oder Guß möglich wäre.

Im Rahmen der Erfindung sind zahlreiche Abänderungen möglich. So ist z.B. die Verbindung der einzelnen Trogstücke 1, 2 auf andere Weise als gezeigt denkbar. Die Seitenwände 4, 5 müßten auch keinen U-förmigen Querschnitt besitzen.

## Patentansprüche

1. Bodenkanalheizung mit einem im Boden versenkten trogförmigen Kanal (1, 2), in dem mindestens ein Konvektor (3) angeordnet ist und der in der Bodenebene durch ein Gitter (12) abgedeckt ist, **dadurch gekennzeichnet, dass** der trogförmigen Kanal in Modulbauweise aus Trogstücken (1, 2) besteht, deren Längswände (4, 5) miteinander verbunden sind.

2. Bodenkanalheizung nach Anspruch 1, **dadurch gekennzeichnet, dass** die Enden der Längswände (4, 5) der Trogstücke (1, 2) lotrecht verlaufende Vertiefungen (6) besitzen, in die Vorsprünge (6')von Verbindungsstücken (7) eingeschoben sind.

3. Bodenkanalheizung nach Anspruch 2, **dadurch gekennzeichnet, dass** die Längswände (4, 5) annähernd U-förmigen Querschnitt aufweisen und die ebenfalls U-förmigen Verbindungsstücke (7) in das "U" der Längswände (4,5) eingeschoben sind.

4. Bodenkanalheizung nach einem der Ansprüche 1 bis 3, **dadurch gekennzeichnet, dass** das Gitter (12) mit seinen Tragteilen (10, 16) unabhängig vom trogförmigen Kanal (1,2) gegenüber dem Boden höhenverstellbar ist.

5. Bodenkanalheizung nach Anspruch 5,. **dadurch gekennzeichnet , dass** in das "U" der Längswände (4,5) Stützen (10) für das Gitter (12) abstützende Träger (11) einschiebbar sind.

6. Bodenkanalheizung nach Anspruch 5, **dadurch gekennzeichnet, dass** die Stützen (10) eine mit einem Schraubloch (14) versehene Bodenplatte (13) besitzen, in welche Verstellschrauben (15) einschraubbar sind.

7. Bodenkanalheizung nach Anspruch 5, **dadurch gekennzeichnet, dass** der trogförmige Kanal (1, 2) aus Kunststoff besteht.
